# EUROPEAN PATENT SPECIFICATION

(11) **EP 0 348 924 B1**
(45) Date of publication and mention of the grant of the patent: **18.01.1995**
(21) Application number: 89111739.2
(22) Date of filing: 28.06.1989
(51) Int. Cl.: F01L 13/08

(54) **Valve device**
Ventileinrichtung
Dispositif de soupape

(30) Priority: 29.06.1988 JP 85024/88 U
(43) Date of publication of application: 03.01.1990
(73) Proprietor: KOMATSU ZENOAH CO., Higashiyamato-shi Tokyo (JP)
(72) Inventor: Nomoto, Shigeki, Musashimurayama-shi Tokyo (JP)
(74) Representative: Perani, Aurelio

(56) References cited:
- AT-B- 19 567
- DE-A- 3 321 938
- DE-C- 188 464
- US-A- 3 638 632
- US-A- 3 888 218
- US-A- 3 893 440

## Description

The present invention relates to a valve device facilitating start-up of an internal combustion engine by relieving compression pressure in the combustion chamber when the engine is started up.

When such an engine is started up with a starter, counterforce against the compression pressure generated by the piston of the engine acts on the starter. Therefore, when a recoil starter is employed, a large amount of force is needed for driving it. Alternatively, when a self-starting motor is employed, it should be a big motor with high power.

With these problems in mind, therefore, it is an object of the present invention to provide a valve device facilitating start-up of an internal combustion engine.

From the prior German Patent DE-C-188 464 a valve device is known, mounted on a cylinder of an internal combustion engine, for communicating with the atmosphere the combustion chamber of the engine at the start-up thereof and for closing the combustion chamber to the atmosphere in the normal run of the engine. Such valve device provides a casing having an accumulation chamber, first passages to connect the combustion chamber and the accumulation chamber, further passages to connect the accumulation chamber with the atmosphere, and a valve plate spring biased to close the first passages. At the start-up of the engine, the valve plate opens the first passages for communicating the combustion chamber with the atmosphere; in the normal run of the engine, the valve plate closes the further passages for closing the combustion chamber to the atmosphere.

According to the invention there is provided a valve device mounted on a cylinder of an internal combustion engine for temporarily communicating with the atmosphere a combustion chamber defined in the cylinder, comprising a casing having one path, another path, and an accumulation chamber which is communicated through said one path to the combustion chamber and through said another path to the atmosphere, valve means disposed in said casing for controlling the communication with the atmosphere of the combustion chamber through said one path, said accumulation chamber, and said another path, characterized in that said valve means comprise two different valves, a check valve and a further valve, separately cooperating with said one and said another path respectively, said check valve permitting compressed mixture generated in the combustion chamber to pass only in a direction from the combustion chamber into the accumulation chamber through said one path, said further valve closing said another path in response to the pressure of the compressed mixture in the accumulation chamber, said further valve being biased by a spring to open said another path when, at engine start-up, the pressure inside the accumulation chamber is below a preset level, and being adapted to close said another path to keep the pressure inside the accumulation chamber at a substantially constant level only when, at engine ingition, the pressure of the compressed mixture passing from the combustion chamber of the engine into the accumulation chamber through said one path reaches a preset value responsive to a sudden increase of the pressure of the compressed mixture.

Further, a supplementary path can be provided communicating the accumulation chamber to the outside thereof.

In operation of the above-mentioned valve device, when the engine is started up with a starter, the spring biases said further valve not to close between the accumulation chamber and said another path so that the compression pressure in the combustion chamber which is generated by the piston and is to apply to the starter is relieved into the atmospheric air through in turn said one path, the check valve, the accumulation chamber and said another path. Therefore, the starter can be driven without any trouble.

When fuel-air mixture in the combustion chamber is ignited, explosion pressure forces said further valve against spring force of the spring to close between the accumulation chamber and said another path. This closed condition of the valve is held by pressure in the accumulation chamber which accumulates the explosion pressure in cooperation with the check valve mechanism, in spite of fluctuation of pressure in the combustion chamber due to reciprocating motion of the engine, so that the engine runs normally.

After the engine stops, the pressure in the accumulation chamber leaks through the supplementary path so that said further valve is forced by the spring to gradually return back to the open condition. As a result, the accumulation chamber communicates again with the atmospheric air through said another path.

The above and other objects, features and advantages of the present invention are explained hereinafter and may be better understood by reference to the drawings and the descriptive matter which follows.
Fig. 1 is a sectional view of a first embodiment of the valve device according to the present invention which is mounted on an engine;
Fig. 2 shows the valve device of Fig. 1 in another operative condition;
Fig. 3 is a sectional view of a second embodiment of the valve device according to the present invention;
Fig. 4 is a sectional view of a third embodiment of the valve device according to the present invention; and
Fig. 5 is a sectional view taken along line V-V of Fig. 4.

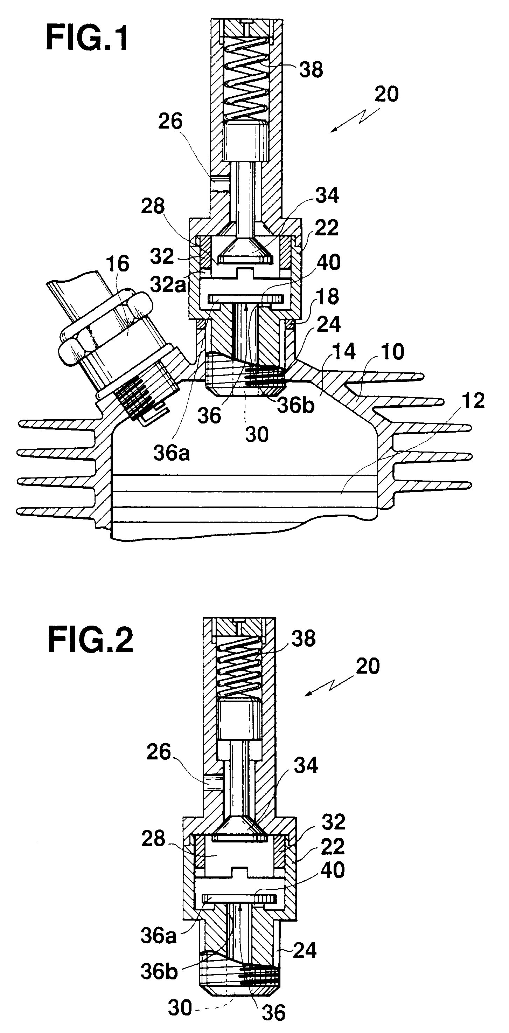

Referring now to Figs. 1 and 2, a valve device 20 according to the present invention and a spark plug 16 are screwed and mounted on a wall defining a combustion chamber 14 above a piston 12 in a cylinder 10 of a two-cycle engine. The valve device 20 has a casing 22 which is secured to the top portion of the cylinder 10, via a washer 18, engaging a threaded portion 24 formed on the lower portion of the casing 22 with a corresponding threaded portion formed on the cylinder 10.

In the casing 22, a path 26, an accumulation chamber 28 thereinafter called accumulator, and a path 30 are respectively defined such that the accumulator 28 communicates with the atmospheric air and the combustion chamber 14 through the path 26 and the path 30, respectively. Also, a stop 32 having notches 32a is fitted in the accumulator 28.

In the upper portion of the accumulator 28, a valve 34 is so disposed as to close the path 26. On the other hand, in the lower portion of the accumulator 28, a valve 36a is so disposed as to close the path 30. This valve 36a and its seat 36b formed in the accumulator 28 construct a so-called check valve mechanism 36. In this first embodiment, the valves 34 and 36a are conical and planar in shape, respectively.

In the upper portion of the casing 22 above the accumulator 28, a spring 38 is so disposed as to bias the valve 34 downwardly so that the accumulator 28 normally communicates with the path 26.

Moreover, a narrow groove 40 is formed in the seat 36b so that the check valve mechanism 36 does not completely close between the accumulator 28 and the path 30.

With the above arrangement, when the engine is started up with, for example, a recoil starter (not shown), the valve device 20 is in the condition as shown in Fig. 1. Thus, fuel-air mixture compressed by the piston 12 enters the accumulator 28 through the path 30 and the check valve mechanism 36 and is relieved from there through the path 26 into the atmospheric air, since the valve 34 is biased not to close between the accumulator 28 and the path 26 by means of the spring 38. As a result, counterforce against compression pressure in the combustion chamber 14 does not occur and the engine can be run by the recoil starter without any trouble.

When the fuel-air mixture is then ignited by the spark plug 16, explosion pressure enters the accumulator 28 through the path 30 and the check valve mechanism 36 and urges the valve 34 upwardly against the spring force of the spring 38 so that the valve 34 closes between the accumulator 28 and the path 26. Consequently, the valve device 20 is in the condition as shown in Fig. 2 and the engine starts automatically to run. The valve 34 is held closed in spite of fluctuation of pressure in the combustion chamber 14 due to reciprocating motion of the piston 12, since the explosion pressure in the accumulator 28 is held by means of the check valve mechanism 36, and the valve 34 is forced to be closed by the pressure.

When the engine stops, the pressure in the accumulator 28 leaks into the combustion chamber 14 through the groove 40 and drops so that the valve 34 is biased by the spring 38 to return back to the condition as shown Fig. 1, namely, in which the valve 34 does not close between the accumulator 28 and the path 26.

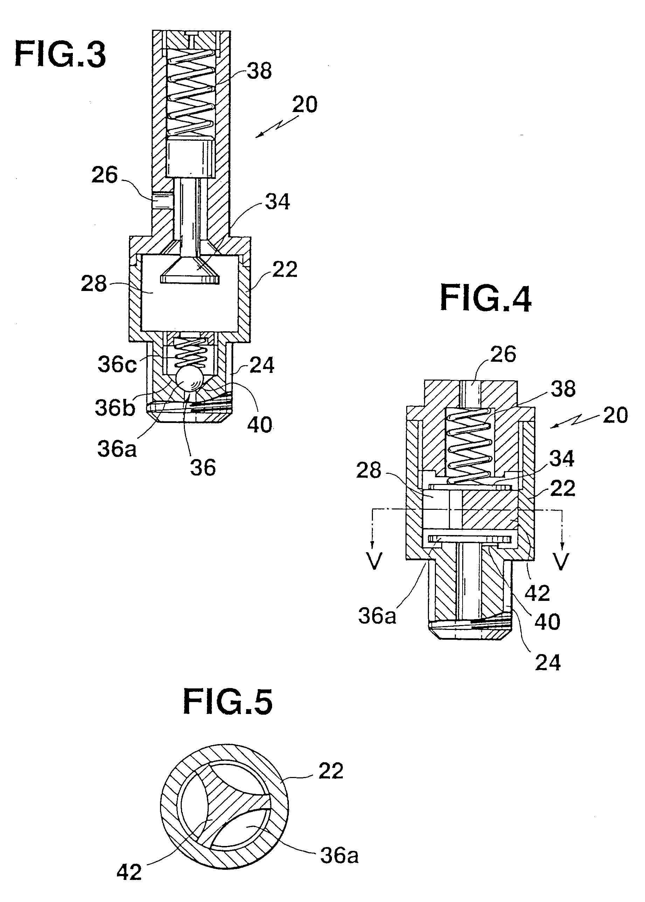

In Fig. 3, there is shown a second embodiment of a valve device according to the present invention, wherein the check valve mechanism 36 comprises a spherical valve 36a, a seat 36b and a spring 36c.

In Figs. 4 and 5, there is shown a third embodiment of a valve device according to the present invention, wherein both valves 34 and 36a are planar, and a radial spacer 42 instead of the stop 32 is fitted in the accumulator 28.

Further, the groove 40 may be formed in the valve 36a instead of the seat 36b. Also, it may be preferable to form an orifice in a wall of the casing 22 which defines the accumulator 28.

Furthermore, valves 34 and 36a may be either conical, spherical or planar, respectively.

As described above, according to the present invention, when an engine is started up, counterforce does not occur, since compression pressure generated by the piston is relieved into the atmospheric air. As a result, the engine can smoothly be started up with a starter without any trouble.

Also, in a valve device according to the present invention, explosion pressure is rapidly transmitted to the accumulator through the check valve mechanism, and in spite of fluctuation of pressure in the combustion chamber, pressure in the accumulator can be held at an approximately constant value by means of the check valve mechanism.

Further, in a valve device according to the present invention, pressure in the accumulator is gradually relieved by means of a narrow path.

## Claims

1. A valve device (20) mounted on a cylinder (10) of an internal combustion engine for temporarily communicating with the atmosphere a combustion chamber (14) defined in the cylinder (10), comprising a casing (22) having one path (30), another path (26), and an accumulation chamber (28) which is communicated through said one path (30) to the combustion chamber (14) and through said another path (26) to the atmosphere, valve means (34,36) disposed in said casing (22) for controlling the communication with the atmosphere of the combustion chamber (14) through said one path (30), said accumulation chamber (28), and said another path (26), characterized in that said valve means comprise two different valves, a check valve (36) and a further valve (34), separately cooperating with said one (30) and said another (26) path respectively, said check valve (36) permitting compressed mixture generated in the combustion chamber (14) to pass only in a direction from the combustion chamber (14) into the accumulation chamber (28) through said one path (30), said further valve (34) closing said another path (26) in response to the pressure of the compressed mixture in the accumulation chamber (28), said further valve (34) being biased by a spring (38) to open said another path (26) when, at engine start-up, the pressure inside the accumulation chamber (28) is below a preset level, and being adapted to close said another path (26) to keep the pressure inside the accumulation chamber (28) at a substantially constant level only when, at engine ignition, the pressure of the compressed mixture passing from the combustion chamber (14) of the engine into the accumulation chamber (28) through said one path (30) reaches a preset value responsive to a sudden increase of the pressure of the compressed mixture.

2. A valve device according to claim 1, further comprising a supplementary path (40) in said casing (22) for gradually decreasing the increased pressure of the compressed gas in the accumulation chamber (28) to allow the further valve (34) to open said another path (26).

3. A valve device according to claim 2, wherein said supplementary path (40) communicates the accumulation chamber (28) with the combustion chamber (14) to leak the compressed gas in the accumulation chamber (28) out to the combustion chamber (14) when the pressure inside the combustion chamber (14) falls below the constant level.

4. A valve device according to claim 3, wherein said supplementary path (40) is provided in the check valve (36).

5. A valve device according to claim 4, wherein said check valve (36) comprises a valve element (36a) and a valve seat (36b) for engaging the valve element (36a), and said supplementary path (40) is formed on the valve seat (36b).

6. A valve device according to claim 1, wherein the preset value is substantially the same as the pressure in the combustion chamber (14) which is exerted when the engine is ignited.

7. A valve device according to anyone of the claims 1,4,5, wherein the check valve (36) comprises a planar valve element (36a in Fig.1).

8. A valve device according to anyone of the claims 1,4,5, wherein the check valve (36) comprises a spherical valve element (36a in Fig.3).

9. A valve device according to claim 1, wherein said further valve comprises a conical valve element (34 in Fig. 1).

10. A valve device according to claim 1, wherein said further valve comprises a planar valve element (34 in Fig. 4).

## Patentansprüche

1. Ventileinrichtung (20), welche an einem Zylinder (10) eines Verbrennungsmotors zum zeitweiligen Verbinden eines im Zylinder (10) definierten Brennraums (14) mit der Atmosphäre angebracht ist, umfassend
ein Gehäuse (22) mit einem Durchlaß (30), einem anderen Durchlaß (26) und einer Speicherkammer (28), die durch den einen Durchlaß (30) mit dem Brennraum (14) und durch den anderen Durchlaß (26) mit der Atmosphäre verbunden ist,
eine in dem Gehäuse (22) angeordnete Ventileinrichtung (34, 36) zum Steuern der Verbindung des Brennraums (14) durch den einen Durchlaß (30), die Speicherkammer (28) und den anderen Durchlaß (26) mit der Atmosphäre,
dadurch **gekennzeichnet**, daß die Ventileinrichtung zwei verschiedene Ventile, ein Rückschlagventil (36) und ein weiteres Ventil (34) umfaßt, die getrennt mit dem einen (30) bzw. dem anderen Durchlaß (26) zusammenwirken, wobei
das Rückschlagventil (36) zulaßt, daß im Brennraum (14) erzeugtes, verdichtetes Gemisch nur in der Richtung von dem Brennraum (14) in die Speicherkammer (28) durch den einen Durchlaß (30) hindurchtritt,
das weitere Ventil (34) den anderen Durchlaß (26) in Reaktion auf den Druck des verdichteten Gemisches in der Speicherkammer (28) schließt,
das weitere Ventil (34) von einer Feder (38) vorgespannt ist, um den anderen Durchlaß (26) zu öffnen, wenn beim Motorstart der Druck innerhalb der Speicherkammer (28) unterhalb eines vorbestimmten Wertes ist, und geeignet ist, den anderen Durchlaß nur dann (26) zu schließen, um den Druck innerhalb der Speicherkammer (28) auf einem im wesentlichen konstanten Wert zu halten, wenn beim Zünden des Motors der Druck des verdichteten Gemisches, welches von dem Brennraum (14) des Motors durch den einen Durchlaß (30) in die Speicherkammer (28) eintritt, in Reaktion auf einen plötzlichen Druckanstieg des verdichteten Gemisches einen vorbestimmten Wert erreicht.

2. Ventileinrichtung nach Anspruch 1, weiter umfassend einen zusätzlichen Durchlaß (40) in dem Gehäuse (22) zum allmählichen Vermindern des angestiegenen Druckes im verdichteten Gas in der Speicherkammer (28), um dem weiteren Ventil (34) das Öffnen des anderen Durchlasses (26) zu gestatten.

3. Ventileinrichtung nach Anspruch 2, wobei der zusätzliche Durchlaß (40) die Speicherkammer (28) mit dem Brennraum (14) verbindet, um das verdichtete Gas in der Speicherkammer (28) in den Brennraum (14) entweichen zu lassen, wenn der Druck innerhalb des Brennraums (14) unter den konstanten Wert abfällt.

4. Ventileinrichtung nach Anspruch 3, wobei der zusätzliche Durchlaß (40) im Rückschlagventil (36) vorgesehen ist.

5. Ventileinrichtung nach Anspruch 4, wobei das Rückschlagventil (36) ein Ventilelement (36a) und einen Ventilsitz (36b) zum Eingriff mit dem Ventilelement (36a) umfaßt, und der zusätzliche Durchlaß (40) in dem Ventilsitz (36b) ausgebildet ist.

6. Ventileinrichtung nach Anspruch 1, wobei der vorbestimmte Wert im wesentlichen der gleiche ist, wie der Druck im Brennraum (14), der beim Zünden des Motors ausgeübt wird.

7. Ventileinrichtung nach einem der Ansprüche 1, 4, 5, wobei das Rückschlagventil (36) ein ebenes Ventilelement (36a in Fig. 1) umfaßt.

8. Ventileinrichtung nach einem der Ansprüche 1, 4, 5, wobei das Rückschlagventil (36) ein sphärisches bzw. kugelförmiges Ventilelement (36a in Fig. 3) umfaßt.

9. Ventileinrichtung nach Anspruch 1, wobei das weitere Ventil ein konisches Ventilelement (34 in Fig. 1) umfaßt.

10. Ventileinrichtung nach Anspruch 1, wobei das weitere Ventil ein ebenes Ventilelement (34 in Fig. 4) umfaßt.

## Revendications

1. Dispositif de soupape (20) monté sur un cylindre (10) d'un moteur à combustion interne pour une communication temporaire avec l'atmosphère d'une chambre de combustion (14) définie dans le cylindre (10), comprenant un corps (22) possédant un circuit (30), un autre circuit (26) et une chambre d'accumulation (28) communiquant via ledit circuit (30) avec la chambre de combustion (14) et via ledit autre circuit (26) avec l'atmosphère, des moyens de soupape (34, 36) placés dans ledit corps (22) pour commander la communication avec l'atmosphère de la chambre de combustion (14) via ledit circuit (30), ladite chambre d'accumulation (28) et ledit autre circuit (26),
dispositif caractérisé en ce que lesdits moyens de soupape comprennent deux soupapes différentes, un clapet anti-retour (36) et une soupape supplémentaire (34) coopérant, de façon séparée, avec lesdits circuits respectifs (30, 26), ledit clapet anti-retour (36) permettant au mélange comprimé généré dans la chambre de combustion (14) de ne passer dans une direction de la chambre de combustion (14) dans la chambre d'accumulation (28) via ledit circuit (30), ladite soupape supplémentaire (34) fermant ledit autre circuit (26) en réponse à la pression du mélange comprimé dans la chambre d'accumulation (28), ladite soupape supplémentaire (34) étant poussée par un ressort (38) pour ouvrir ledit autre circuit (26) lorsqu'au démarrage du moteur, la pression à l'intérieur de la chambre d'accumulation (28) est inférieure à un niveau préétabli, et étant prévue pour fermer ledit autre circuit (26) afin de maintenir la pression à l'intérieur de la chambre d'accumulation (28) à un niveau pratiquement constant seulement lorsqu'à l'allumage du moteur, la pression du mélange comprimée passant de la chambre de combustion (14) du moteur dans la chambre d'accumulation (28) via ledit circuit (30) atteint une valeur préétablie correspondant à une augmentation brusque de la pression du mélange comprimé.

2. Dispositif de soupape selon la revendication 1, comprenant, de plus, un circuit supplémentaire (40) dans ledit corps (22) pour diminuer, de façon progressive, la pression accrue du gaz sous pression dans la chambre d'accumulation (28) afin de permettre à la soupape supplémentaire (34) d'ouvrir ledit autre circuit (26).

3. Dispositif de soupape selon la revendication (2), dans lequel ledit circuit supplémentaire (40) fait communiquer la chambre d'accumulation (28) avec la chambre de combustion (14) pour drainer le gaz sous pression dans la chambre d'accumulation (28) vers la chambre de combustion (14) lorsque la pression à l'intérieur de la chambre de combustion (14) chute en dessous du niveau constant.

4. Dispositif de soupape selon la revendication 3, dans lequel ledit circuit supplémentaire (40) est prévu dans le clapet anti-retour (36).

5. Dispositif de soupape selon la revendication 4, dans lequel ledit clapet anti-retour (36) comprend un élément de clapet (36a) et un siège de clapet (36b) coopérant avec l'élément de clapet (36a) et ledit circuit supplémentaire (40) est formé sur le siège de clapet (36b).

6. Dispositif de soupape selon la revendication 1, dans lequel la valeur préétablie est pratiquement la même que la pression dans la chambre de combustion (14) qui est exercée lors de l'allumage du moteur.

7. Dispositif de soupape selon l'une quelconque des revendications 1, 4, 5, dans lequel le clapet anti-retour (36) comprend un élément de clapet plat (36a sur la figure 1).

8. Dispositif de soupape selon l'une quelconque des revendications 1, 4, 5, dans lequel le clapet anti-retour (36) comprend un élément de clapet sphérique (36a sur la figure 3).

9. Dispositif de soupape selon la revendication 1, dans lequel ladite soupape supplémentaire comprend un élément conique de soupape (34 sur la figure 1).

10. Dispositif de soupape selon la revendication 1, dans lequel ladite soupape supplémentaire comprend un élément de soupape plat (34 sur la figure 4).
